Europäisches Patentamt

European Patent Office

Office européen des brevets

(19)

(11) Veröffentlichungsnummer: **0 120 471 B1**

# (12) EUROPÄISCHE PATENTSCHRIFT

(45) Veröffentlichungstag der Patentschrift: **12.06.91**

(51) Int. Cl.⁵: **D21C 9/00,** C08L 1/02

(21) Anmeldenummer: **84103167.7**

(22) Anmeldetag: **22.03.84**

(54) **Redispergierbare mikrofibrillierte Cellulose.**

(30) Priorität: **28.03.83 US 479555**

(43) Veröffentlichungstag der Anmeldung:
**03.10.84 Patentblatt 84/40**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**CH-A- 419 592
DE-C- 537 335
US-A- 3 573 058
US-A- 4 374 702**

(73) Patentinhaber: **ITT INDUSTRIES INC.
320 Park Avenue
New York, NY 10022(US)**

(72) Erfinder: **Herrick, Franklin Willard
1125 Olympic Avenue
Shelton, Washington 98584(US)**

(74) Vertreter: **Klunker . Schmitt-Nilson . Hirsch
Winzererstrasse 106
W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft redispergierbare mikrofibrillierte Cellulose und ein Verfahren zur Herstellung mikrofibrillierter Cellulose die getrocknet und redispergiert werden kann.

Mikrofibrillierte Cellulose ist eine natürliche Cellulose, bei der die Cellulosefasern durch wiederholten Durchgang durch einen Homogenisator zur Ausbildung von Fibrillen und Mikrofibrillen aufgeschlossen und zerfasert wurden. Mikrofibrillierte Cellulose ist durch einen sehr hohen Wasserrückhaltewert, einen hohen Grad an chemischer Zugänglichkeit und die Fähigkeit zur Bildung von stabilen Gelen in Wasser oder anderen polaren Lösungsmitteln gekennzeichnet. Ihre Herstellung und Eigenschaften ist in der US-A-43 74 702 beschrieben, eine Vielzahl von Anwendungsmöglichkeiten sind in den US-A-43 41 807 und 43 78 381 aufgezeigt.

Eine Dispersion von mikrofibrillierter Cellulose in Wasser ist ein Gel mit pseudoplastischen oder thixotropen Viskositätseigenschaften. Beim Trocknen werden jedoch die Eigenschaften der Cellulose merklich verändert. Ihre Dispergierbarkeit, Hydratation- und Viskoseeigenschaften gehen verloren oder werden zumindest merklich verringert, und zwar in Abhängigkeit von der Schärfe der Trocknung. Mikrofibrillierte Cellulose besitzt eine Reihe von Anwendungsmöglichkeiten, z.B. in Lebensmitteln, Kosmetika und medizinischen Produkten, wobei es vorteilhaft wäre, wenn Cellulose eingesetzt werden könnte, die sich trocknen läßt und dann ohne Verlust der Vikosität oder anderer Eigenschaften redispergiert werden kann. Bei anderen Anwendungen wäre es vorteilhaft, Verkrustungen und physikalische Zerstörung zu vermeiden, was, wie sich gezeigt hat, beim Trocknen geschehen kann.

Aus der US-A-3 573 058 ist ein Verfahren zur Herstellung von mikrokristalliner Cellulose bekannt, bei dem die Cellulose unter Zufügung eines Schutzkolloides , wie z.B. Gelatine, getrocknet wird. Dies ermöglicht ihre Lagerung mit anschließender Hydratation, ohne daß eine erneute Zerkleinerung erforderlich ist.

Die CH-A-419 592 beschreibt ein Verfahren zur Herstellung von mikrokristalliner Cellulose, aus der eine haltbare Dispersion erzeugt werden kann. Dies geschieht unter Zuhilfenahme von natürlich vorkommenden Ölen und Fetten oder ggf. entsprechender synthetischer Produkte.

Die DE-C-537 335 betrifft ein Verfahren zur Herstellung von in Wasser leicht zerteilbarem Zellstoff oder Halbstoff für die Papierherstellung, wobei die dort genannten Zusätze wie verschiedene Zuckerarten bzw. zuckerhaltige Ablaugen der Rüben- und Rohrzuckerindustrie den Zweck haben, durch ihre hygroskopische Wirkung die Abgabe der letzten Feuchtigkeitsmengen der behandelten Produkte zu verhindern.

Die Fähigkeit, nach dem Trocknen oder der Hydradation erneut Wasser aufzunehmen, ist ein Ziel bei vielen Hydratisierten Stoffen, sowohl Cellulose als auch Nichtcellulose. Es ist insbesondere ein angestrebtes Ziel bei vielen Lebensmitteln und Medizinen, die, einmal entwässert, schwierig oder gar nicht rückhydratisiert werden können. Im Falle von herkömmlicher Cellulosepulpe weiß man, daß der Trockenvorgang die chemische Reaktivität und Fähigkeit zur Wasseraufnahme der Pulpe verringert. Es ist ferner in der Zellstofftechnik bekannt, daß bestimmte Zusätze dazu verwendet werden können, die beim Trocknen auftretenden Zwischenbindungen zwischen den Fasern zu verringern. Derartige Zusätze werden der Pulpe vor dem Trockenvorgang zugesetzt, um die Energie zu verringern, die zur Auffaserung der Pulpeplatten, d.h. zur Trennung der trocknenen Fasern zur Verwendung von z.B. in Pulpeflocken, erforderlich ist. Derartige Mittel sind im allgemeinen kationische Oberflächenbehandlungsmittel wie Quartäramine von Fettsäuren, die in geringen Mengen wirken. Siehe z.B. Svensk Papperstidming, Kolmodin et al Nr. 12, Seiten 73 bis 78, 1981 und US-A-41 44 122. Die Oberfläche von mikrofibrillierter Cellulose ist jedoch wesentlich größer als die von gewöhnlichen Holzzellstoffasern, und zwar in der Größenordnung von 1000 mal so groß, und damit ist das Problem der Verhornung und der physikalischen Zerstörung beim Trocknen bei ihr wesentlich größer und bedeutender.

Hier will die Erfindung Abhilfe schaffen, Die Erfindung, wie sie in den Ansprüchen gekennzeichnet ist, löst die Aufgabe, eine trockene mikrofibrillierte Cellulose bereitzustellen,die beim Trockenvorgang weitgehend unverändert bleibt und danach rehydratisiert und in Wasser redispergiert werden kann zu einer Viskosität, die im wesentlichen der der ungetrockneten mikrofibrillierten Cellulose entspricht. Ferner wird ein wirtschaftliches Verfahren angegeben, durch das irreversible Veränderungen vermieden werden können, die beim Trocknen von mikrofibrillierter Cellulose auftreten.

Die Erfindung beschreibt ein Verfahren, bei dem mikrofibrillierte Cellulose in einem Fließstoff suspendiert ist und in diesem Zustand getrocknet wird, wobei in der Suspension eine Verbindung enthalten ist, die das Ausbilden von Bindungen zwischen den Cellulosefibrillen weitgehend verhindert. Das Produkt ist damit eine getrocknete mikrofibrillierte Cellulose, die nach dem erneuten Dispergieren in Wasser eine Viskosität von mindestens 50% der Viskosität einer entsprechenden Konzentration an mikrofibrillierter, in Wasser dispergierter Cellulose vor dem Trocknen besitzt.

EP 0 120 471 B1

Man nimmt an, daß der Mechanismus, durch den ein Zusatz zu einer redispergierbaren mikrofibrillierter Cellulose führt, darin besteht, daß eine Verhornung oder Trockenspannung der Cellulose durch Wasserstoffbindungen verhindert * . Der Zusatz bildet Wasserstoffbindungen oder Komplexe mit den Cellulosefibrillen und verhindert somit eine Bindung derselben untereinander und damit die Bildung eines schwierig hydratisierbaren Produktes.In der Gegenwart des Zusatzes bleiben die Cellulosefibrillen für das Wasser zugänglich und lassen sich leicht unter Ausbildung von hochviskosen Dispersionen rehydratisieren. Der Zusatz sollte deshalb eine Verbindung sein, die in der Lage ist, Wasserstoffbindungen zwischen den Cellulosefibrillen weitgehend zu verhindern. Er sollte auch weder mit der Cellulose reagieren noch bei der Trockentemperatur eine merkliche Flüchtigkeit besitzen. Es wurde eine große Anzahl organischer und anorganischer Zusätze, sowohl flüssig wie fest, geprüft und bestimmte Verbindungen mit den geforderten Eigenschaften zur Herstellung von redispergierbarer mikrofibrillierter Cellulose wurden gefunden. Man hat ferner festgestellt, daß die Zusätze in merklichen Mengen benutzt werden müssen, im allgemeinen mindestens in einem Anteil von der Hälfte des Trockengewichts der mikrofibrillierten Cellulose und vorzugsweise mindestens in der gleichen Menge wie diese. Zu den geeignetsten Zusätzen zählen Polyhydroxyverbindungen, eingeschlossen insbesondere Kohlenwasserstoffe oder deren Verbindungen, selbstredend andere als Cellulose selbst, wie Glykole, Zucker, Stärke, Oligo- und Polysacharide, Tangextrakte und Abkömmlinge von Kohlenwasserstoff- und Glykolverbindungen. Unter Abkömmlichen versteht man dabei substituierte oder Reaktionsprodukte von Kohlenwasserstoffen oder Glykolen aus der ersten Stufe, die ihre Polyhydroxifunktion und ihre Kohlenwasserstoff- oder Glykoleigenschaften noch besitzen. Geeignete Glykole schließen Äthylen-, Propylen-, Dipropylen und Butylenglykol ein sowie ferner Glycerin und niedermolekulare Glykolpolymere wie Polyglykole und Glykolabkömmliche wie Triäthanolamin. Geeignete Zucker sind solche mit 5 und 6 C-Atomen wie Glukose, Dextrose, Mannose und Galactose sowie ferner Disacharide wie Sucrose und Lactose, ferner Zuckeralkohole wie Mannitol und Sorbitol. Geeignete Kohlenwasserstoffabkömmlinge sind die Bisulfitaddukte der gewöhnliche Zucker wie z.B. Natriummannosebisulfit und Natriumglukosebisulfit, Zuckersäuren wie Aldonsäuren, Sacharinsäuren und Uronsäuren, ferner die große Gruppe von Acetalderivaten von Zuckern wie z.B. Methylglukosid. Bestimmte, große Mengen an Zuckern, Pektinen oder Pflanzen gummienthaltenden Lebensmitteln sind ebenso geeignet wie z.B. Früchte, Gemüsebrei und fettarme Trockenmilch. Andere geeignete Kohlenwasserstoffderivate sind Carboxymethyl- und Hydroxyäthylstärke, Carboxymethyl- und Hydroxyäthylcellulose sowie Methyl- und Äthylcellulose. Ein sehr effektiver und wirtschaftlicher Polyhydroxyzusatz ist Sucrose, ein Disacharid, das leicht als wasserfreier Komplex mit mikrofibrillierter Cellulose getrocknet werden kann .

Zusätzlich zu den Polyhydroxyverbindungen können auch Alkalimetallsalze von Boraten, Polyboraten, Phosphaten und Polyphosphaten eingesetzt werden, obgleich sie nicht die gleiche Wirkung zeigen wie Polyhydroxyverbindungen. Ferner haben sich bestimmte aprotische Lösungsmittel wie Dimethylsulfoxyd oder Dimethylacetamid und Dimethylformamid als wirkungsvolle Zusätze erwiesen. Diese Lösungsmittel sind Bestandteile von Lösungssystemen für Cellulose (siehe z.B. US-A-40 76 933 und 43 02 252). Man nimmt an, daß die anorganischen Salze und aprotischen Lösungsmittel Komplexe mit der Cellulose oder den Hydroxylgruppen bilden und somit Wasserstoffbindungen verhindern.

Die besten Zusätze sind im allgemeinen Verbindungen mit niedrigem Molekulargewicht. Bei angenähert gleichem Gehalt an mikrofibrillierter Cellulose und Zusatz beeinflussen Verbindungen mit niedrigem Molekulargewicht die Viskositätseigenschaften der Dispersion nicht. Zusätze mit höherem Molekulargewicht wie z.B. Carboxymethylcellulose oder Hydroxyäthylcellulose erhöhen entsprechend ihrer Konzentration und ihrem Molekulargewicht die Viskosität, derartige Mischungen redispergieren jedoch sehr schön, was zeigt, daß die Molekulargröße die Bildung von Wasserstoffbindungen mit mikrofibrillierter Cellulose beim Trocknen nicht verhindert, was andererseits wiederum die mikrofibrillierte Cellulose davor bewahrt, Bindungen mit sich selbst einzugehen.

In den oben genannten, die Verwendung von mikrofibrillierter Cellulose betreffenden US-A-43 41 807 und 43 78 381 wird auf die Herstellung von mikrofibrillierter Cellulose mit Mischungen aus Glycerin und Wasser und auf den Zusatz von bestimmten hydrophilen Polymeren zur Unterstützung des Prozesses der Fibrillierung der Cellulose bezug genommen. Es wird auch der Zusatz von derartigen Lebensmittelzusätzen wie Rohrzucker zu bestimmten mikrofibrillierten Celluloseansätzen offenbart. Man findet jedoch weder einen Hinweis auf das Trocknen von Cellulose in Anwesenheit derartiger Zusätze noch wird in diesem Patent erkannt und davon Gebrauch gemacht, daß diese Zusätze in der Lage sind, eine irreversible Modifikation beim Trocknen von mikrofibrillierter Cellulose zu verhindern.

Die zur Erzielung einer redispergierbaren mikrofibrillierten Cellulose erforderliche Menge an Zusatz hängt wesentlich von der Art des Zusatzes, dem Grad der Mikrofibrillierung der Cellulose, dem Trocknungs-

\* wird

3

grad und der Art des Trocknungsprozesses ab. Wird der Zusatz dazu benutzt, die Redispersion zu unterstützen, so variiert im allgemeinen die Menge von der Hälfte bis zur zweifachen Gewichtsmenge der Cellulose. Soll der Zusatz die Hauptkomponente des Produktes sein, so kann seine Menge das zweifache an Cellulosegewicht überschreiten. Der Zusatz kann in der Aufschlämmung der mikrofibrillierten Cellulose untergemischt oder in ihm gelöst werden, er kann auch der flüssigen Suspension der faserförmigen Cellulose vor der Mikrofibrillierung in dem Homogenisator zugefügt werden. Der Vorteil der Beimischung des Zusatzes zur Cellulose vor der Mikrofibrillierung ist der, daß dadurch die Kosten der Homogenisierung verringert werden, wenn das Verfahren unter Verwendung von Rohmaterial in Form trockener Holzpulpe aubläuft. Cellulosepulpen, die zuvor nicht getrocknet worden waren, sogenannte nie-getrocknete Pulpen, sprechen auf die Homogenisierung besser an als getrocknete Pulpen. Trocknen der Pulpe in Gegenwart des Zusatzes verhindert bestimmte Trocknungsspannungen und entspricht einer Anzahl Durchgänge durch den Homogenisator. Man erhält z.B. die gleichen Viskositätseigenschaften bei einer mit einem Zusatz behandelten trockenen Pulpe und einen fünffachen Durchgang durch einen Homogenisator wie bei einem zehnfachen Durchgang von herkömmlicher getrockneter Pulpe, aus der hochviskose mikrofibrillierte Cellulose erzeugt werden soll.

Die faserförmige bzw. mikrofibrillierte Cellulose kann nach einem der herkömmlichen Trocknungstechniken getrocknet werden. Trocknungen zwischen 25 und 105° C unter normalen oder verschärften Bedingungen und sowohl Gefriertrocknung wie Sprühtrocknung wurden experimentell durchgeführt. Trocknung bei Raumtemperatur ist bei vielen Zusätzen nicht wirkungsvoll, da Wasser als Hydrat zurückgehalten wird. Eine Trocknungstemperatur von 50 bis 70° C ist die günstigste und entspricht den Temperaturen, die beim Trocknen vieler Lebensmittelprodukte benutzt wird, bei denen mikrofibrillierte Cellulose große Anwendung findet.

Mikrofibrillierte Cellulose wird üblicherweise als flüssige Dispersion oder Suspension hergestellt, die weniger als 10Gew.% Cellulose , üblicherweise 1 bis 6 Gew.%, enthält. Die spezifische Konzentration hängt davon ab, ob zerkleinerte oder unzerkleinerte Pulpe bzw. ob gewerbliche oder laboratoriumsmäßige Homogenisatoren bei der Herstellung der mikrofibrillierten Cellulose verwendet werden.

Falls nicht anders angegeben, erfolgt die Herstellung der mikrofibrillierten Cellulose wie in der US-A-43 74 702. Wie dort ausgeführt, passiert eine fließfähige Suspension von fasriger Cellulose eine Öffnung mit schmalem Durchmesser, in der sie einen Druckabfall von mindestens 22.685 KPa sowie einer Scherwirkung bei hoher Geschwindigkeit und einem nachfolgenden, die hohe Geschwindigkeit herabsetzenden Anprall ausgesetzt wird. Der Durchlauf der Suspension durch die Öffnung wird bis zur Erzielung einer weitgehend stabilen Cellulosesuspension wiederholt. Die resultierende mikrofibrillierte Cellulose ist durch ein Wasserrückhaltevermögen von über 280%, ein Absetzvolumen nach 60 Minuten in einer 0,5 Gew.%igen Suspension in Wasser von mehr als 60% und einer durch Hydrolyse bei 60% in einer einmolaren Salzsäure gesteigerten Abbaurate von mindestens dem doppelten Wert wie bei Cellulose, die einen Mahlgrad von 50 mml (kanandischer Standardmahlgrad) aufweist, gekennzeichnet. Die getrocknete mikrofibrillierte Cellulose nach der vorliegenden Erfindung ist charakterisiert durch ihre Fähigkeit, mindestens 50% ihrer ursprünglichen Viskosität in Wasser wiederzuerlangen. Die Viskosität wird dabei zur Kennzeichnung herangezogen, da sie ein genaues Maß für die Fähigkeit zur Ausbildung von hydratisierten Strukturen von Kohlenwasserstoff ist. Ohne einem Zusatz nach der Erfindung gewinnt die mikrofibrillierte Cellulose von höchstens 2 bis maximal 20% ihrer ursprünglichen Viskosität nach dem Trocknen zurück, wiederum abhängig von der Strenge der Trocknung.

Die folgenden Beispiele dienen zur Erläuterung der Erfindung. Falls nicht anders angegeben, sind alle Teil- und Prozentangaben in Gewichtmengen.

Beispiel 1

20,8 l von 2%iger mikrofibrillierter Cellulose wurde aus Southern Pine-Sulfitpulpe hergestellt. Um die Faserlänge auf 0,7 mm zu reduzieren, wurde die Pulpe trocken zerschnitten. Ein kleiner Gaulin-Homogenisator bei einem Druck von 55 MPa angewendet. 12 l von 0,8%iger mikrofibrillierter Cellulose (96 g Cellulose) aus einem vorhergehenden Ansatz wurde als suspendierendes Mittel für weitere 320 g getrockneter Pulpe (340 g als Ganzes, 6% Feuchtigkeit) und 8760 ml deionisiertes Wasser verwendet. Die verdünnte Aufschlämmung von mikrofibrillierter Cellulose (12 l) wurde in einen Vorratsbehälter gebracht und sowohl der Homogenisator als auch die Speisepumpe in Gang gesetzt. Der Druck wurde auf 55 MPa eingestellt. Die im Trockenzustand zerkleinerte Pulpe (340 g) wurde in 4 l Wasser aufgeschlämmt, mit dem restlichen Wasser ( 4760 ml) und der verdünnten mikrofibrillierten Cellulose in mehreren Anteilen gemischt, die alle dem System über den Vorratsbehälter zugeführt wurden. Dieser Vorgang dauert ca. 20 Minuten und die Temperatur stieg auf 70° C. An diesem Punkt setzte das Timing ein, so daß die eingesetzte Pulpe 10 mal den Homogenisator passierte. Die Prozeßtemperatur wurde durch Kühlwaser auf 75 bis 85° C eingestellt. Die Durchpumprate durch den Homogenisator wurde mit 5 l/min angenommen. Sie wurde durch Messungen bei etwa 2,5 und 8 Durchgängen und der entsprechend eingestellten Gesamthomogenisierzeit bestätigt. Im vorliegenden Beispiel betrug die Gesamthomogenisierzeit für 10 Durchgänge 42 Minuten. Das gewonnene Endprodukt hatte ein Volumen von 16 l mit 2,02% Feststoffgehalt. Der Rückstand im Apparat betrug 5 l, der jedoch weitgehend durch Verdünnen und Ausschwemmen mit Wasser rückgewonnen werden konnte und als suspendierendes Mittel für die nächste Folge diente. Das Produkt besaß bei 22° C die folgenden Viskositätseigenschaften (gemessen mit einem schreibenden Viskosimeter):

| Scherrate, sec$^{-1}$ | Viskosität, mPa·s |
|:---:|:---:|
| 100 | 1366 |
| 500 | 402 |
| 1000 | 248 |

Nach der Verarbeitung der Celluloseaufschlämmung und dem Homogenisatordurchgang wurde die mikrofibrillierte Cellulose auf Raumtemperatur abgekühlt und in einem entsprechenden verschlossenen Behälter gelagert. Vor dem Testen oder der Probenahme wurde jedes mal sorgfältig gemischt oder geschüttelt. Der Feststoffgehalt an mikrofibrillierter Cellulose wurde durch 18 stündiges Trocknen bei 80° in einem Intensivofen, gefolgt von 2 weiteren Stunden bei 105° C an 10 bis 20 g schweren Proben bestimmt.

Zur Bestimmung der Wirkung des Zusatzes wurde ein einfacher Test vorgenommen. Dieser bestand darin, 400 g an 2%iger mikrofibrillierter Cellulose (8 g Feststoff) mit 8 g Zusatz auf Trockenbasis zu mischen. Die Viskosität der Mischung wurde aufgezeichnet. Danach wurden trockene Filme hergestellt, da die Trockenrate und die Spannung der Filme an verhältnismäßig kleinen Proben kontrolliert werden kann. Die Filme wurden in kleine Quadrate zerschnitten und zusammen mit 2%iger mikrofibrillierter Cellulose Feststoff in Wasser redispergiert. Sofern nicht anders angegeben, wurde dieser im Beispiel 2 näher erläuterte Test bei allen Beispielen vorgenommen.

Beispiel 2

Unterschiedliche Mengen von Rohrzucker wurde dann zu 2%igen Dispersionen von mikrofibrillierter Cellulose, hergestellt nach Beispiel 1, zugefügt. Zur Herstellung von getrockneten Filmen wurden ca. 90 g der Dispersion auf eine polierte Stahlplatte (25 x 36 cm) aufgebracht. Mit Hilfe eines Balkens aus rostfreiem Stahl, der auf eine Höhe von 2,5 mm über der Platte angeordnet war, wurde das Material auf eine rechteckige Fläche von 16 x 22 cm verteilt. Diese gleichmäßige Schicht wurde dann bei 60° 2 Stunden lang in einem Unterluftofen getrocknet. Der resultierende trockene Film besaß eine Stärke von 0,04 bis 0,08 mm, je nach dem Gehalt an Zusatz, und wurde in einer Plastikhülle bis zu den Test gelagert. Unter diesen Bedingungen lag die Filmfeuchtigkeit bei ca. 5%.

Sowohl in diesem wie den folgenden Beispielen wurden entsprechend hergestellte Filme in Stücke von 2 x 2 cm zerschnitten und zur Erzeugung einer 2%igen Dispersion von mikrofibrillierter Cellulose Wasser zugefügt. Es wurde z.B. eine Dispersion aus mikrofibrillierter Cellulose und Rohrzucker im Verhältnis 50:50 durch Zugabe einer 4,2 g Probe von mikrofibrillierter Cellulose/Rohrzucker zu 95,8 g Wasser hergestellt. Die 100 g Probe wurde dann bei Raumtemperatur und mäßiger Umdrehung in einem Mischer 10 Minuten durchgerührt. Die Viskositätsmessung in einem schreibenden Viskosimeter erfolgte bei Raumtemperatur (22 bis 24° C). Die Viskosität bei einer Scherrate von 1000 sec$^{-1}$ wurde zum Vergleich der Eigenschaften der mikrofibrilierten Cellulosedispersionen herangezogen. Tabelle 1 vergleicht die Viskosität der Dispersionen vor und nach dem Trocknen von verschiedenen Anteilen an Rohrzuckerzusatz bei unterschiedlichen Trocknungstemperaturen.

## Tabelle I

| Probe | MFC[*]/Rohrzucker | Viskosität Original Dispersion mPa·s, 1000 sec$^{-1}$ | Trocknung °C | Viskosität Redispersion mPa·s, 1000 sec$^{-1}$ |
|---|---|---|---|---|
| 1 | 100/0 (Vgl.) | 226 | 60 | 38 |
| 2 | 16.5/83.5 | 236 | 60 | 282 |
| 3 | 66.7/33.3 | 224 | 60 | 199 |
| 4 | 50.0/50.0 | 224 | 25 | 228 |
| 5 | 66.7/33.3 | 201 | 60 | 154 |
| 6 | 50.0/50.0 | 176 | 60 | 185 |

\* MFC = mikrofibrillierte Cellulose

Die Tabelle zeigt, daß eine Mischung von MFC/Rohrzucker, Verhältnis 50/50 (feucht) bei 60° ohne Verringerung der Viskosität des redispergierten Produktes getrocknet werden kann (Trocknen bei 25° C dauert zulange). Rohrzucker in Mengen über 50/50 ergibt eine vollständige redispergierbare MFC hoher Viskosität, Mengen an Rohrzucker unterhalb 50/50 ergibt eine redispergierte MFC mit etwas Viskositätsverlust. Optimale Mengen an Rohrzucker reichen von 33% bis 200% gezogen auf Gewicht der Cellulose.

Beispiel 3

Eine Reihe weiterer Tests wie in Beispiel 2 wurde unter Verwendung von Glycerin anstelle von Rohrzucker als Zusatz durchgeführt . Sämtliche Proben wurden bei 60° C getrocknet. Obgleich wasserfreies Glycerin nach 2 Stunden bei 60° C keinen Gewichtsverlust zeigte, wurde dennoch ein geringer Glycerinverlust durch die Anwesenheit von Wasser während des Trockenvorgangs dieser Tests bewirkt. Die Ergebnisse sind in Tabelle II zusammengefaßt.

EP 0 120 471 B1

## Tabelle II

| Probe | MFC/Glycerin | Viskosität Original Dispersion mPa·s,1000 sec$^{-1}$ | Viskosität Redispersion mPa·s,1000 sec$^{-1}$ |
|---|---|---|---|
| 1 | 50/50 | 228 | 182 |
| 2 | 28.5/71.5 | 222 | * |
| 3 | 16.5/83.5 | 219 | * |
| 4 | 80/20 | 226 | 62 |
| 5 | 66.7/33.3 | 226 | 188 |
| 6 | 50/50 | 226 | 200 |
| 7 | 66.7/33.3 | 226 | 201 |
| 8 | 66.7/33.3 | 193 | 119 |
| 9 | 50/50 | 189 | 191 |

*MFC redispergiert, die Filme blieben jedoch infolge Überschuß an Glycerin klebrig.

Wie schon im Fall von Rohrzucker zeigt die Tabelle II, daß eine 50/50 von MFC/Glycerin bei nur geringer Wirkung auf die Viskosität getrocknet werden kann. Bei Anteilen über 70% wird die Trocknung der Dispersionen schwierig. Liegt der Anteil an Glycerin unter 33% so treten geringe Viskositätsverluste auf. Die optimalen Glyceringehalte liegen zwischen 40 und 60% des MFC-Gewichtes. Diese Ergebnisse lassen sich wieder mit der Probe 1, dem Vergleich in Tabelle I, vergleichen.

Beispiel 4

Die Tests aus den Beispielen 2 und 3 wurden mit Äthylenglycol und Propylenglycol als Zusätze wiederholt. Wiederum wurden die redispergierten Mischungen bei 60°C getrocknet.

7

## Tabelle III

| Probe | MFC/Glycol | Viskosität Original Dispersion mPa·s, 1000 sec$^{-1}$ | Viskosität Redispersion mPa·s, 1000 sec$^{-1}$ |
|---|---|---|---|
| | Äthylen-glycol * | | |
| 1 | 66.7/33.3 | 224 | 71 |
| 2 | 50/50 | 224 | 337 |
| | Propylen-glycol* | | |
| 3 | 66.7/33.3 | 191 | 180 |

* Äthylengycol und in geringerem Maße Propylenglycol erleiden aufgrund ihrer Flüchtigkeit beim Trocknen in Gegenwart von Wasser Verluste. Damit zeigen die Ergebnisse bei höheren Glycolwerten keine wesentlichen Viskositätsvergleichswerte.

Diese Glycole liefern dispergierbare trockene MFC bei 50/50 und höheren MFC/Glycol-Verhältnissen. Der Äthylenglycolverlust beim Trocknen bei 60° wirkt sich bei den niedrigeren Werten weniger aus.

Beispiel 5

Vergleichstests wurden mit anderen Zuckern als Rohrzucker und mit Zuckerabkömmlingen durchgeführt. In allen Beispielen lagen Verhältnisse von 50/50 an MFC/Zusatz bei 2%igen MFC-Dispersionen vor. Die Ergebnisse sind in Tabelle IV enthalten.

## Tabelle IV

| Probe | Zusatz | Viskosität Original Dispersion mPa·s. 1000 sec$^{-1}$ | Viskosität Redispersion mPa·s, 1000 sec$^{-1}$ |
|---|---|---|---|
| 1 | Dextrose (Glucose) | 256 | 250 |
| 2 | Galactose | 180 | 205 |
| 3 | Na-Glucoheptonat | 195 | 244 |
| 4 | Sorbitol | 195 | 191 |
| 5 | Mannitol | 250 | 187 |
| 6 | Xylose | 183 | 209 |
| 7 | Methyl-a-D Glucosid | 176 | 218 |

Sämtliche Zusätze nach Tabelle IV ergeben eine außergewöhnlich glatte Redispersion von getrockneter mikrofibrillierter Cellulose bei Verhältnissen von 50/50 an MFC/Zusatz. Die Veränderung in der Viskosität der Originaldispersion war weitgehend das Ergebnis der Anwendung von unterschiedlichen Ansätzen von 2%iger MFC. Als Vergleich ist wieder die Viskosität der 2%igen MFC-Vergleichsdispersion, Probe 1, Tabelle I, als zusatzlose Vergleichssubstanz zu nennen.

Beispiel 6

Die folgenden Tests wurden mit 2%igen MFC-Dispersionen mit einer Vielzahl von Zusätzen, eingeschlossen Stärke, einem Glykol und anorganischen Salzen durchgeführt. Die Mengenverhältnisse betrugen wiederum 50/50 an MFC/Zusatz. Die Ergebnisse sind in Tabelle V aufgeführt.

## Tabelle V

| Probe | Zusatz | Viskosität Original Dispersion mPa·s, 1000 sec$^{-1}$ | Viskosität Redispersion mPa·s, 1000 sec$^{-1}$ |
|---|---|---|---|
| 1 | kein Vgl. | 226 | 38 |
| 2 | lösl.Stärke (Kartoffel) | 213 | 160 |
| 3 | Dipropylen- glycol | 187 | 277 |
| 4 | Trinatrium- phosphat | 230 | 139 |
| 5 | Dinatriumhydro- genphosphat | 217 | 143 |
| 6 | Natrium- perborat | 238 | 135 |

Stärke erwies sich als besonders wirkungsvoller Zusatz. Obgleich die Viskosität der Redispersion auf etwa 160 MPa s reduziert war, war die Redispersion ziemlich glatt und ergab ein stabiles Gel. Bestimmte Alkalimetallsalze von Phosphaten und Boraten sind teilweise wirkungsvoll. Dipropylenglycol scheint mit der MFC zu reagieren.

Beispiel 7

Verschiedene Lebensmittel wurden als Zusätze zu 2%igen MFC-Dispersionen verwendet, alle in einem Verhältnis von 50/50 an MFC/Zusatz. Die Filme wurden bei 60°C getrocknet, die Ergebnisse sind nachstehend angeführt.

## Tabelle VI

| Probe | Zusatz | Viskosität Original Dispersion mPa·s, 1000 sec$^{-1}$ | Viskosität Redispersion mPa·s, 1000 sec$^{-1}$ |
|-------|--------|------------------------------------------------------|------------------------------------------------|
| 1 | Trocken-magermilch | 197 | 201 |
| 2 | gek.Apfel-brei | 160* | 158 |
| 3 | gek.Karotten-brei | 150* | 146 |
| 4 | Dextrin | 189 | 152 |

* Diese Viskositätswerte sind Schätzwerte, extrapoliert aus der Viskosität der die Grundlage bildenden 2%igen MFC-Mischungen.

Trockenmagermilch enthält das Disacharid Lactose, während Äpfel und Karotten einerseits Pektin und andererseits Gummiharze und Zucker enthalten. Dextrin ist hydrolisierte Stärke von niedrigem Molekulargewicht. Alle vier Zusätze ergaben in unterschiedlichem Maße Redispersionen der MFC.

Beispiel 8

Einer 2%igen MFC-Dispersion wurden unterschiedliche Cellulosen, aus natürlichem Gummi oder Seegrasextrakten stammend, zugefügt, die Mengenverhältnisse betrugen wieder 50/50 an MFC/Zusatz, die Filme wurden bei 60° C getrocknet. Die Ergebnisse sind in Tabelle VII aufgeführt.

## Tabelle VII

| Probe | Zusatz | Viskosität Original Dispersion mPa·s, 1000 sec$^{-1}$ | Viskosität Redispersion mPa·s, 1000 sec$^{-1}$ |
|---|---|---|---|
| 1 | Pectin | 197 | 180 |
| 2 | Gummi | 172 | 258 |
| 3 | Gummi-arabicum | 197 | 191 |
| 4 | Agar Seegrasextract | 250 | 133 |
| 5 | Na-Carboxy-methylcellulose (mittlere Viskosität) | 416 | 496 |
| 6* | Hydroxyäthyl-cellulose (hohe Viskosität) | 156 | 148 |

\* Diese Probe hatte einen Gesamtgehalt von 2%-Feststoffen - 1 % MFC, 1% Hydroxyäthylcellulose.

Sämtliche obigen Zusätze waren wirkungsvoll. Die einfachen Gummisorten mit niedrigem Molekulargewicht (Proben 1 bis 4) waren insofern die besten, da die Viskosität von MFC Zusatz nicht beeinflußt wurde. Bei den polymeren Gummitypen (Proben 5 und 6) überlagerte deren Viskosität die der MFC.

Beispiel 9

Verschiedene organische Verbindungen wurden 2%igen MFC-Dispersionen im Verhältnis 50/50 von MFC/Zusatz zugefügt und die Filme bei 60° C getrocknet. Die Ergebnisse sind in Tabelle VIII festgehalten.

EP 0 120 471 B1

## Tabelle VIII

| Probe | Zusatz | Viskosität Original Dispersion mPa·s, 1000 sec$^{-1}$ | Viskosität Redispersion mPa·s, 1000 sec$^{-1}$ |
|---|---|---|---|
| 1 | Dimethylacetamid | 172 | 208 |
| 2 | Dimethylsulfoxid | 171 | 289 |
| 3 | Triäthanolamin | 185 | 258 |

Die aprotischen Lösungsmittel, Dimethylacetamid und Dimethylsulfoxid, waren wie Triäthanolamin wirkungsvoll und erzielten ausgezeichnete MFC-Redispersionen durch Komplexbildung mit der Cellulose.

Beispiel 10

In diesem Beispiel wurden quaternäre Ammoniumverbindungen, wie sie die US-A-41 44 122 beschreibt, als Zusatz verwendet. Es handelte sich dabei quaternäre Amine von Fettsäuren, die in Mengen von weniger als 0,2 Gew.% an MFC bis zu einem Gewicht, das der Menge an MFC entspricht, eingesetzt wurden. Die Ergebnisse waren wie folgt:

## Tabelle IX

| Probe | MFC/ quatärnere Amine | Viskosität Original Dispersion mPa·s, 1000 sec$^{-1}$ | Viskosität Redispersion mPa·s, 1000 sec$^{-1}$ |
|---|---|---|---|
| 1 | 99.8/0.2 | 203 | 46 |
| 2 | 98/2 | 205 | 53 |
| 3 | 91/9 | 187 | 68 |
| 4 | 83/17 | 192 | 93 |
| 5 | 50/50 | 219 | 226 |

Die Ergebnisse zeigen, daß nur bei einem Mengenverhältnis von 50/50 an MFC/quaternärem Amin ein redispersibles Produkt resultierte. In der Praxis heißt das, daß die Menge an quaternärem Amin mindestens 75 Gew.% der des MFC betragen sollte.

Beispiel 11

In diesem Beispiel wurden anstelle der getrockneten Filme der MFC-Proben die ursprünglichen 2%igen Dispersionen mit und ohne Zusatz unterVerwendung eines Laboratoriums-Sprühtrockner bei einer eingestellten Einlaßtemperatur von 200° C sprühgetrocknet. Das Material wurde in eine Hochgeschwindigkeitsturbine mit einer Menge von 50 ml/min eingepumpt, die Auslaßtemperatur betrug dabei 67° c. Die Viskositäten wurden wie in den vorhergehenden Beispielen vor und nach dem Trockenvorgang gemessen. Die Ergebnisse zeigt die Tabelle X.

13

## Tabelle X

| Probe | Zusatz | Viskosität Original Dispersion mPa·s, 1000 sec$^{-1}$ | Viskosität Redispersion mPa·s, 1000 sec$^{-1}$ |
|---|---|---|---|
| 1 | 100 MFC (kein Zusatz) | 195 | 4 |
| | Sucrose | | |
| 2 | 66.7/33.3 | 195 | 70 |
| 3 | 50/50 | 195 | 199 |
| | Glycerin | | |
| 4 | 66.7/33.3 | 193 | 9 |
| 5 | 50/50 | 193 | 103 |
| | Propylenglycol | | |
| 6 | 66.7/33.3 | 193 | 4 |
| 7 | 50/50 | 193 | 16 |

Die Vergleichsproben (1) der sprühgetrockneten MFC ohne Zusatz zeigt in der Tat keine Viskosität, was eine wesentlich schärfere Trocknung gegenüber dem Film bei 60°C anzeigt. Der Zusatz an Sucrose im Verhältnis 50/50 zeigte die größte Wirkung. Bei der Probe mit Glycerin und Mengenverhältnis 66.7/33.3 und den beiden Propylenglycoltests ergaben sich starke Verluste durch die Flüchtigkeit im Trockner.

Der Zusatz kann der mikrofibrillierten Cellulose zugemischt oder in ihr gelöst werden, er kann auch der Cellulosepulpe vor der Mikrofibrillierung zugefügt werden, die vorzugsweise davor nicht getrocknet worden ist. Ältere Arbeiten haben gezeigt, daß niemals-getrocknete Pulpen auf die Homogenisierung mehr ansprechen als getrocknete Pulpen. Das Trocknen der Pulpe mit dem vorliegenden Zusatz entspricht einem fünffachen Durchgang durch den Homogenisator. Dies wird in dem folgenden Beispiel verdeutlicht.

Beispiel 12

Proben an gebleichter Sulfitpulpe mit einer Konsistenz von 30%, die zuvor nicht getrocknet worden waren, wurden mit einem trockenen Zusatz entweder im Verhältnis 67/33 oder 50/50 versehen, im Falle des Vergleichs wurde dieser weggelassen. Die Pulpe und der Zusatz wurden gründlich gemischt, bei 60°C getrocknet und im trockenen Zustand auf eine Faserlänge von 0,7 mm geschnitten. Die 2% an Cellulosepulpe enthaltenden Aufschlämmungen wurden wie im Beispiel 1 mikrofibrilliert, in dem man sie 2 bis 10 mal den Homogenisator passieren ließ. Aus der mikrofibrillierten Cellulose wurden dann Filme hergestellt und diese wie oben beschrieben bei 60°C getrocknet. Die Tabelle XI zeigt die Viskosität der ursprünglichen MFC-Dispersionen nach einer Reihe von Durchgängen durch den Homogenisator. Ferner sind die Viskositätswerte angegeben nach dem Trockenvorgang und dem Redispergieren der Proben mikrofibrillierter Cellulose, die 10 mal den Homogenisator passiert hat.

## Tabelle XI

| Probe | MFC/Zusatz | | | Viskosität Original Dispersion mPa·s, 1000 sec$^{-1}$ | Viscosität Redispersion mPa·s, 1000 sec$^{-1}$ |
|---|---|---|---|---|---|
| 1 | 100 MFC | | | | |
| | | 5 | pas | 70 | |
| | | 10 | pass | 144 | 20–30 |
| 2 | Sucrose | | | | |
| | 66/33 | 5 | pass | 164 | |
| | | 10 | pass | 219 | 131 |
| | 50/50 | 2 | pass | 82 | |
| | | 5 | pass | 201 | |
| | | 10 | pass | 258 | 244 |
| 3 | Glycerin | | | | |
| | 77/23 | 5 | pass | 152 | |
| | | 10 | pass | 217 | 127* |
| | 81/19 | 5 | pass | 135 | |
| | | 10 | pass | 254 | 78* |

* Der Verlust an Glycerin beim Trocknen veränderte das Gewichtsverhältnis von MFC/Glycerin von 67/33 auf 77/23 und von 75/25 auf 81/19.

Die obige Tabelle zeigt, daß der Zusatz zur Verringerung der Homogenisationsenergie um 50% oder mehr beiträgt. Das bedeutet, beide Proben MFC/Sucrose mit den Mengenverhältnissen 67/33 und 50/50, hergestellt mittels fünf Durchgängen durch den Homogenisator, besaßen eine höhere Ursprungsviskosität als die 100%ige mikrofibrillierte Cellulose, hergestellt mittels 10 Durchgängen durch den Homogenisator. Darüberhinaus zeigen die Ergebnisse in Tabelle XI, daß durch Mischen des Zusatzes mit der Cellulose vor dem Homogenisieren die Spannungen, die durch das Trocknen vor dem Homogenisieren herbeigeführt werden, weitgehend ausgeräumt werden, während die Dispergierbarkeit der Cellulose nach dem Homogenisieren im wesentlichen erhalten bleibt.

## Ansprüche

1. Getrocknete, redispergierbare mikrofibrillierte Cellulose gekennzeichnet durch einen die Wasserstoffbindungen zwischen den Cellulosefibrillen verhindernden Zusatz von mindestens 50 Gew.% der Cellulose und eine Viskosität nach der Redispersion in Wasser, die mindestens 50% der Viskosität einer äquivalenten Konzentration der in Wasser dispergierten Cellulose vor dem Trocknen beträgt.

2. Cellulose nach Anspruch 1, dadurch gekennzeichnet, daß der Zusatz eine Polyhydroxyverbindung ist.

3. Cellulose nach Anspruch 2, dadurch gekennzeichnet, daß der Zusatz eine niedermolekulare Polyhydroxyverbindung ist.

4. Cellulose nach Anspruch 2, dadurch gekennzeichnet, daß die Polyhydroxyverbindung Zucker ist und in der halben bis zweifachen Menge des Cellulosegewichts vorliegt.

5. Cellulose nach Anspruch 3, dadurch gekennzeichnet, daß die Polyhydroxyverbindung ein Glycol aus der Gruppe Äthylen, Propylen, Dipropylen oder Butylenglycol ist.

6. Cellulose nach Anspruch 1, dadurch gekennzeichnet, daß der Zusatz ein Alkaliborat oder ein Alkaliphosphat ist.

7. Cellulose nach Anspruch 1, dadurch gekenzeichnet, daß der Zusatz ein aprotisches Lösungsmittel wie Dimethylacetamid oder Dimethylsulfoxid ist.

8. Cellulose nach Anspruch 1, dadurch gekennzeichnet, daß der Zusatz ein Amin oder eine quarternäre Ammoniumverbindung ist.

9. Verfahren zur Herstellung der Cellulose nach einem der Ansprüche 1 bis 8, dadurch gekennzeichnet, daß die mikrofibrillierte Cellulose in Wasser suspendiert, einer der Zusätze zugesetzt und die damit veränderte Suspension getrocknet wird.

10. Verfahren nach Anspruch 9, dadurch gekennzeichnet, daß der Trocknungsvorgang bei einer Temperatur von 50 bis 70° C erfolgt.


## Claims

1. Dried redispersable microfibrillated cellulose, characterized by the addition of an additive which inhibits the hydrogen bonds between the cellulose fibrils and represents at least 50 % by weight of the cellulose and by a viscosity after the redispersion in water amounting to at least 50% of the viscosity of an equivalent concentration of the cellulose dispersed in water before drying.

2. Cellulose as claimed in Claim 1, characterized in that the additive is a polyhydroxy compound.

3. Cellulose as claimed in Claim 2, characterized in that the additive is a low-molecular polyhydroxy compound.

4. Cellulose as claimed in Claim 2, characterized in that the polyhydroxy compound is sugar and is present in the quantity of half to twice that of the weight of cellulose.

5. Cellulose as claimed in Claim 3, characterized in that the polyhydroxy compound is a glycol from the ethylene, propylene, dipropylene or butylene glycol group.

6. Cellulose as claimed in Claim 1, characterized in that the additive is an alkali borate or an alkali phosphate.

7. Cellulose as claimed in Claim 1, characterized in that the additive is an aprotic solvent such as dimethyl acetamide or dimethyl sulphoxide,

8. Cellulose as claimed in Claim 1, characterized in that the additive is an amine or a quaternary ammonium compound.

9. Process for manufacturing the cellulose as claimed in any one of Claims 1 to 8, characterized in that the microfibrillated cellulose is suspended in water, one of the additives is added to it and the suspension thus changed is dried.

10. Process as claimed in Claim 9, characterized in that the drying process takes place at a temperature of 50 to 70° C.

**Revendications**

1. Cellulose microfibrillée redispersable séchée, caractérisée par un additif d'au mains 50 % en poids par rapport à la cellulose, qui empêche la formation de liaisons hydrogène entre les fibrilles de cellulose, et une viscosité, après redispersion dans l'eau, égale, avant séchage, à au moins 50 % de la viscosité d'une cellulose de concentration équivalente dispersée dans l'eau.

2. Cellulose selon la revendication 1, caractérisée en ce que l'additif est un composé polyhydroxylé.

3. Cellulose selon la revendication 2, caractérisée en ce que l'additif est un composé polyhydroxylé de faible masse moléculaire.

4. Cellulose selon la revendication 2, caractérisée en ce que le composé polyhydroxylé est un sucre et est présent en une proportion allant de la moitié au double du poids de cellulose.

5. Cellulose selon la revendication 3, caractérisée en ce que le composé polyhydroxylé est un glycol choisi parmi éthylène-, propylène-, dipropylène- ou butylèneglycol.

6. Cellulose selon la revendication 1, caractérisée en ce que l'additif est un borate alcalin ou un phosphate alcalin.

7. Cellulose selon la revendication 1, caractérisée en ce que l'additif est un solvant aprotique tel que diméthylacétamide ou diméthylsulfoxyde.

8. Cellulose selon la revendication 1, caractérisée en ce que l'additif est une amine ou un composé d'ammonium quaternaire.

9. Procédé de fabrication de la cellulose selon une des revendications 1 à 8, caractérisé en ce que l'on met en suspension la cellulose microfibrillée dans l'eau, que l'on ajoute un des additifs et que l'on sèche la suspension ainsi modifiée.

10. Procédé de fabrication selon la revendication 9, caractérisé en ce que le processus de séchage se déroule à une température de 50 à 70 °C.